# EUROPEAN PATENT SPECIFICATION

(11) **EP 2 913 807 B1**
(45) Date of publication and mention of the grant of the patent: **05.08.2020**
(21) Application number: 14157246.1
(22) Date of filing: 28.02.2014
(51) Int. Cl.: G07G 1/00, G07G 3/00, G06Q 20/20, G06Q 20/32, G06Q 20/40, G06Q 20/42

(54) **Self-checkout with mobile payment**
Selbstbedienungskasse mit mobilem Bezahlen
Auto-vérification avec paiement mobile

(43) Date of publication of application: 02.09.2015
(73) Proprietor: Otto Group Digital Solutions GmbH, 20354 Hamburg (DE)
(72) Inventor: Winkler, Nils, 22397 Hamburg (DE); Kress, Oliver, 20255 Hamburg (DE); Hipelius, Ralf, 20357 Hamburg (DE)
(74) Representative: Behr, Wolfgang

(56) References cited:
- EP-A1- 2 631 860
- EP-A2- 2 381 409
- US-A1- 2008 258 877
- US-A1- 2011 251 892

## Description

### Field

The present invention relates to self-checkout with mobile payment. More specifically, the present invention relates to measures (including methods, apparatuses and computer program products) for enabling self-checkout with mobile payment, such as in a self-checkout fastlane with cashless and cardless payment by a mobile payment service in a retail shop.

### Background

The present disclosure generally pertains to cashless and cardless payment, i.e. payment transactions in which a customer does not require money in cash and/or a debit card, credit card or the like for purchasing items at a point of sale in a retail shop. Such transactions can be processed by way of mobile payment via a mobile payment service for which both the customer and the retail store have corresponding accounts.

Conventionally, several techniques of using mobile devices, such as e.g. smartphones or tablets, for mobile payment at a point of sale are known. Such techniques include, for example, scanning a barcode or two-dimensional code with a mobile device from a display at the cash desk, or displaying a numeric code, a barcode or a two-dimensional code on a mobile device typed in or scanned by the cashier, or tapping a mobile device which supports a Near-Field-Communication (NFC) standard on a terminal supporting the same standard.

Although all of those techniques claim a convenient and fast checkout experience for a customer, the customer still has to place his/her items on a checkout belt, a cashier has to scan the items and at least the items have to be packed again into a cart, a basket or a bag. So at all, the claimed time advantage using such conventional mobile payment techniques is hardly noticeable in the overall checkout process. This is why customers and merchants call into question the benefit of mobile payment techniques via mobile devices up to now, and request for more convenient and faster mobile payment techniques.

Therefore, some approaches for a self-checkout with a mobile device have already been proposed to solve this problem, as exemplified below.

Document EP 2 631 860 A1 describes a computer-implemented method for displaying data allowing a payment of a payment item by means of a Pin-Pad connected to a cash desk system, the method comprising: receiving, by a first application program of the cash desk system, a payment order for the payment of the payment item, the payment order comprising an indication of the payable amount; and sending a 2D code by the first application program via a hardware interface of the Pin-Pad to the Pin-Pad for displaying said 2D code on a display of the Pin-Pad, the 2D code encoding a transaction ID and the payable amount, the transaction ID being particular to the received payment order. This method relies on existing point of sale terminal infrastructure, which is expensive to acquire/maintain, and on the capturing of said 2D code via a camera module of a mobile device. This capturing therefore needs a manual interaction of a customer at a close distance between the Pin-Pad and the mobile device. In conclusion the described method just emulates a card present transaction at the point of sale and does not solve any problem of the time-consuming retail checkout process.

Document US 2012/095853 A1 describes inter alia a method for purchasing an item using a mobile device comprising: inputting identification information into the mobile device which identifies the item for purchase; generating an order for the item identified by the identification information; and displaying on a display of the mobile device an optical machine-readable representation of the order. Further it discloses a method for purchasing an item using a mobile device having a digital camera comprising: capturing an image of an identifying portion of the item with the digital camera; analyzing the identifying portion of the item and generating identification information which identifies the item for purchase; generating a virtual shopping cart containing item information representing the item; generating an order for the item identified by the identification information; tendering payment for the item; transmitting payment information to a remote server for acceptance; generating a receipt indicating acceptance of the payment information; and displaying the receipt on a display of the mobile device.

Document WO 2013/134865 A1 describes a solution which provides a method of capturing images from purchase items and the whole shopping receptacle with a portable device and analyze them, while the device could also be a smart phone for example. Although scanning of barcodes etc. is described, too, the focus is on an image recognition method of shopping basket content for a self-checkout.

Document EP 2 642 445 A1 describes techniques for network-based self-checkout. In such techniques, a consumer of an establishment uses a mobile app to self-scan barcodes of items for purchase, a running list of the items is maintained by a network shopping manager, the consumer uses the app to purchase the items when desired, and the shopping manager sends a code to the app to validate the purchase. When exiting the establishment, the app provides the code to a self-service checkout system and, as the customer bags the items, each item is validated against the list without requiring any additional action on the part of the consumer. The self-checkout system described therein can also include a weighing device for a cross check.

Document US 2014/006195 A1 discloses a system and method for facilitating checkout, such as in retail establishments for example grocery stores, whereby a user utilizes a mobile device to collect product identification and pricing information. At checkout, the user presents the mobile device to the legacy scanning system of the retail establishments whereby barcodes or other graphic information symbols are presented to the scanner, enabling quick checkout. Product, shopper, and other data related to the shopping experience may be collected and further utilized by the system provider. The system and method described therein reduce the time required for checkout and enable the collection of data for later use by the system provider. Also, remote server generated QR codes or other graphic information symbols can be used to further reduce checkout time.

However, all of the systems and solutions described above require additional customer actions in the course of the purchasing and/or checkout processes, and cannot exclude that a customer passes the checkout with items which have not been detected and are thus not paid for. Therefore, all of these systems require additional control staff and/or complex and burdensome technical means like optronic inspection or weighing systems. In any case, several manual and time-consuming processes have to be done by the customer for a self-checkout. Hence, all of these systems fail to meet the requirement for a more convenient and faster mobile payment technique which actually provides for the claimed advantages of such systems.

Accordingly, there is still a demand to enable real self-checkout with mobile payment, such as in a self-checkout fastlane with cashless and cardless payment by a mobile payment service in a retail shop, in which the customer is not required to perform additional actions in the course of the purchasing and/or checkout processes.

### Summary

The self-checkout system according to claim 1 and the self-checkout method of claim 13 aim at addressing at least part of the above issues and/or problems.

Various aspects of exemplifying embodiments of the present invention are set out in the dependent claims.

According to a first aspect of the present invention, there is provided a self-checkout system comprising: a proximity device configured to detect or get detected by a mobile device of a user of a mobile payment service in the proximity of a point-of-sale of a shop supporting the mobile payment service, wherein the user of the mobile device is a customer, a cashier system configured to automatically recognize shopping items of the customer when approaching and/or passing the cashier system, and to generate shopping information, including at least one of a shopping basket content and a total amount of the recognized shopping items, and a server device configured to confirm payment by the mobile payment service upon matching between a first transaction identifier, which is generated by the server device on the basis of the shopping information received from one of the proximity device and the cashier system, and a second transaction identifier, which is delivered by the mobile device and received from the mobile device or the one of the proximity device and the cashier system, and to supply a payment confirmation at least to the one of the proximity device and the cashier system.

According to a second aspect of the present invention, there is provided a self-checkout method in a self-checkout system comprising a proximity device, a cashier system and a server device, comprising: the proximity device detects or gets detected by a mobile device of a user of a mobile payment service in the proximity of a point-of-sale of a shop supporting the mobile payment service, wherein the user of the mobile device is a customer, the cashier system automatically recognizes shopping items of the customer when approaching and/or passing the cashier system, and generates shopping information, including at least one of a shopping basket content and a total amount of the recognized shopping items, and the server device confirms payment by the mobile payment service upon matching between a first transaction identifier, which is generated by the server device on the basis of the shopping information received from one of the proximity device and the cashier system, and a second transaction identifier, which is delivered by the mobile device on the basis of the first transaction identifier and received from the mobile device or the one of the proximity device and the cashier system, and supplies a payment confirmation at least to the one of the proximity device and the cashier system.

According to a third aspect of the present invention, there is provided a computer program product comprising computer-executable computer program code which, when the computer program code is executed (or run) on a self-checkout system or the program is run on a self-checkout system (e.g. computers of apparatuses according to the aforementioned system-related example aspect of the present invention), is configured to cause the self-checkout system to carry out a method according to the aforementioned method-related example aspect of the present invention.

The computer program product may comprise or may be embodied as a (tangible and/or non-transitory) computer-readable (storage) medium or the like, on which the computer-executable computer program code is stored, and/or the program is directly loadable into an internal memory of the computer or a processor thereof.

Further developments and/or modifications of the aforementioned example aspects of the present invention are set out herein with reference to the drawings and exemplifying embodiments of the present invention.

By way of exemplifying embodiments of the present invention, there is enabled real self-checkout with mobile payment, such as in a self-checkout fastlane with cashless and cardless payment by a mobile payment service in a retail shop, in which the customer is not required to perform additional actions in the course of the purchasing and/or checkout processes.

### Brief description of drawings

In the following, the present invention will be described in greater detail by way of non-limiting examples with reference to the accompanying drawings, in which
Figure 1 shows a schematic diagram illustrating a first example of a self-checkout system according to exemplifying embodiments of the present invention,
Figure 2 shows a diagram illustrating an example of a self-checkout procedure in a first exemplary use case according to exemplifying embodiments of the present invention,
Figure 3 shows a diagram illustrating a first example of a self-checkout procedure in a second exemplary use case according to exemplifying embodiments of the present invention,
Figure 4 shows a diagram illustrating an example of a self-checkout procedure in a third exemplary use case according to exemplifying embodiments of the present invention,
Figure 5 shows a diagram illustrating an example of a self-checkout procedure in a fourth exemplary use case according to exemplifying embodiments of the present invention,
Figure 6 shows a flowchart illustrating an example of a self-checkout method according to exemplifying embodiments of the present invention,
Figure 7 shows a diagram illustrating a second example of a self-checkout procedure in the second exemplary use case according to exemplifying embodiments of the present invention,
Figure 8 shows a schematic diagram illustrating a second example of a self-checkout system according to exemplifying embodiments of the present invention,
Figure 9 shows a schematic diagram illustrating an example of a structure of apparatuses according to exemplifying embodiments of the present invention, and
Figure 10 shows a schematic diagram illustrating another example of a structure of apparatuses according to exemplifying embodiments of the present invention.

### Detailed description of drawings and embodiments

The present invention is described herein with reference to particular non-limiting examples and to what are presently considered to be conceivable embodiments of the present invention. A person skilled in the art will appreciate that the present invention is by no means limited to these examples, and may be more broadly applied.

Hereinafter, various exemplifying embodiments and implementations of the present invention and its aspects are described using several variants and/or alternatives. It is generally noted that, according to certain needs and constraints, all of the described variants and/or alternatives may be provided alone or in any conceivable combination (also including combinations of individual features of the various variants and/or alternatives). In this description, the words "comprising" and "including" should be understood as not limiting the described exemplifying embodiments and implementations to consist of only those features that have been mentioned, and such exemplifying embodiments and implementations may also contain features, structures, units, modules etc. that have not been specifically mentioned.

In the drawings, it is noted that lines/arrows interconnecting individual blocks or entities are generally meant to illustrate an operational coupling there-between, which may be a physical and/or logical coupling, which on the one hand is generally implementation-independent (e.g. wired or wireless) and on the other hand may also comprise an arbitrary number of intermediary functional blocks or entities not shown.

According to exemplifying embodiments of the present invention, in general terms, there are provided measures and mechanisms for enabling self-checkout with mobile payment, such as in a self-checkout fastlane with cashless and cardless payment by a mobile payment service in a retail shop. More specifically, there are provided measures and mechanisms for enabling real self-checkout with mobile payment, in which the customer is not required to perform additional actions in the course of the purchasing and/or checkout processes.

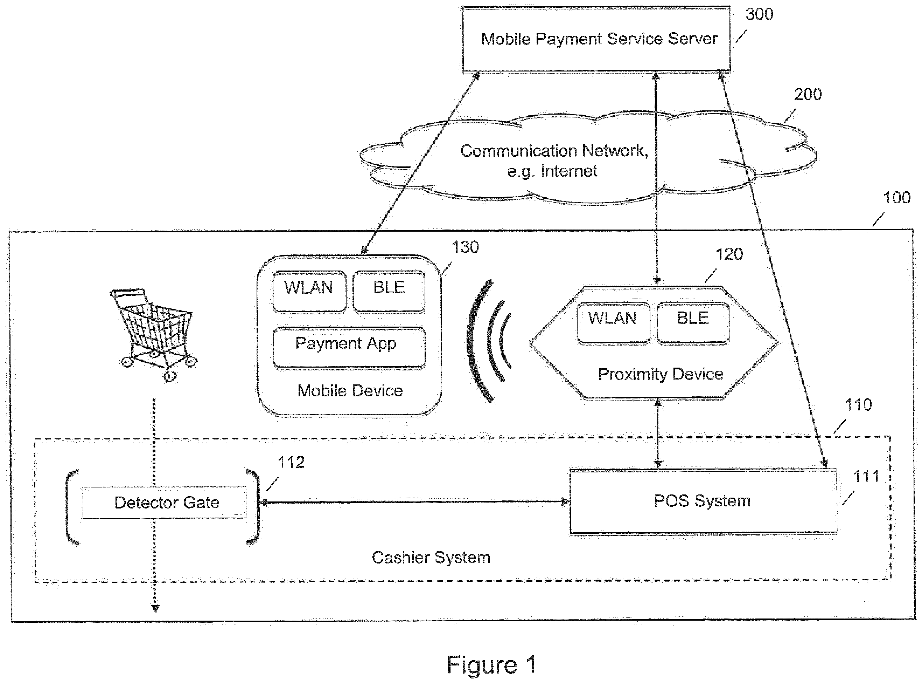

Figure 1 shows a schematic diagram illustrating a first example of a self-checkout system according to exemplifying embodiments of the present invention.

As shown in Figure 1, exemplifying embodiments of the present invention relate to a self-checkout system comprising a shop environment 100 and a server device 300 of a mobile payment service, which are connected by at least one communication network 200, such as the Internet, i.e. via wired and/or wireless Internet connections. The shop environment 100 represents respective technical equipment of a shop supporting the mobile payment service (i.e. a shop having an (retailer) account of the mobile payment service), and comprises a cashier system 110, a proximity device 120, and a mobile device 130.

As illustrated in Figure 1, the cashier system 110 may for example comprise a POS (Point-Of-Sale) system 111, such as a cash desk arrangement or some computer-based payment equipment, and a detector gate 112, such as an arrangement with RFID (Radio Frequency IDentification) sensing capability. The detector gate may automatically detect, possibly at once, all product or class of goods identifying tags attached to the shopping items, e.g. cheap smart labels, printed for example with capacitive ink from nanoparticles, RFID (in accordance with ISO 15693) or other EAS (Electronic Article Surveillance) tags, e.g. up to several hundreds in a so-called bulge. Such product-identifying tags may indicate at least one of product identification and product prize of a respective item.

The detector gate 112 may send identifiers of scanned shopping item to the POS system 111, which may allocate/resolve the identifiers to/in product and prize information, and add up the allocated/resolved prizes to a total amount and forward it to the proximity device or the server device, waiting for a payment confirmation from the server device. Although not illustrated in Figure 1, the cashier system 110 may also comprise a physical gate by which a payment lane can be blocked until payment for the present transaction is confirmed by the mobile payment service, i.e. the server 300. The cashier system 110 (e.g. the POS system 111 thereof) can have a (direct) interface to the server device 300, or can be indirectly connected to the server device 300 by an interface, like the open standard ZVT-Protocol for example, to the proximity device 120, which is then a self-computing, bidirectional device, supporting one or more data transmission standards. Although not illustrated in Figure 1, the server device 300 also constitutes an interface to further entities involved in the payment process, such as a bank server managing the user's account for providing liquidity to the user's user account in the mobile payment service.

As illustrated in Figure 1, the proximity device 120 may support one or more data transmission standards, and it may be a self-computing device (with bidirectional communication capability). Namely, the proximity device 120 comprises bidirectional communication capability, e.g. via BLE (Bluetooth Low Energy) and/or WLAN (Wireless Local Area Network). As illustrated in Figure 1, the mobile device 130 is a self-computing device, which supports one or more data transmission standards and has a display. Namely, the mobile device 130 may for example comprise cellular (e.g. 3G, LTE, LTE-A) communication capability, as well as bidirectional BLE (Bluetooth Low Energy) and/or WLAN (Wireless Local Area Network) communication capability. Thus, the mobile device 130 may have two possible connections to the server device, i.e. a direct connection using its cellular communication capability, and an indirect connection via the proximity device using its short-range (BLE/WLAN) communication capability. Further, the mobile device 130 may have a payment application for operation in the self-checkout system, i.e. a software application, which has at least payment functionality with respect to the mobile payment service. The mobile device 130 may for example be a smartphone, a tablet, a smart watch or smart glasses, or the like of a user of the mobile payment service (i.e. a user having an (user) account of the mobile payment service).

As mentioned above, BLE is a communication standard in accordance with IEEE 802.15.4 specifications, and WLAN is a communication standard in accordance with IEEE 802.11 specifications.

As illustrated in Figure 1, the cashier system 110 may have a (direct) interface with the server device 300, or may (indirectly) communicate with the server device 300 via the proximity device 120. The proximity device may have a (direct) interface with the server device 300, or may (indirectly) communicate with the server device 300 via the cashier system 110. The mobile device 130 may have (wireless) connectivity to the server device 300, e.g. via a mobile communication system, such as a 3G, LTE, LTE-A system, open WLAN, or the like.

According to exemplifying embodiments of the present invention, the cashier system 110 and the proximity device 120, together with the server device 300, may constitute a self-checkout fast lane (at least, in a figurative meaning) with mobile payment functionality.

According to the exemplifying embodiments of the present invention, the cashier system 110 may be a classical checkout lane and the self checkout system may be embedded therein. At least the cashier system 110 may provide additional measures of payment for redundancy, such as card reading and/or NFC supporting terminals or a code scanner/camera for inter alia catching a payment code, e.g. a Quick Response (QR) code, or a display for showing such a code, preferably together with at least the total amount. Those measures, as well as additional control lights, such as LEDs or the like, may also be attached to or fitted in the proximity device 120. The latter could also be embedded in a common device, such as a tablet or the like.

According to exemplifying embodiments of the present invention, a self-checkout process with mobile payment in the self-checkout system of Figure 1 can be as follows.

A customer who is a user of the mobile payment service checks in into a shop, i.e. a physical shop, either manually or automatically e.g. via contactless data transmission. An automatic check-in via contactless data transmission may, for example, but not exclusively, an electro-magnetic transmission, e.g. by Bluetooth Low Energy (BLE) or Wireless LAN (WLAN), or via sonic waves, e.g. ultra sound, or via (flickering) light signals, e.g. Visual Light Communication (VLC), which may be emitted by some device/point in or near the shop, such as e.g. the proximity device. After check-in, the customer collects shopping items e.g. in a shopping cart while walking through the shop. When the customer approaches the cashier system 110, the proximity device 120 detects or gets detected by the customer's mobile device 130 in the proximity of a point-of-sale of the shop, wherein the user of the mobile device 130 is a customer. When the customer approaches and/or passes the cashier system 110, the cashier system 110, i.e. the detector gate 112, automatically recognizes the shopping items of the customer, and the cashier system 110, i.e. the POS system 111, generates shopping information, including at least one of a shopping basket content and a total amount of the recognized shopping items. The cashier system 110 or the proximity device 120 communicates the shopping information to the server device 300, and the server device 300 confirms payment by the mobile payment service with respect to the shopping information (i.e. the present transaction) upon matching between a first (or, server-generated) transaction identifier and a second (or, mobile device-supplied) transaction identifier. The first transaction identifier is generated by the server device 300 on the basis of the received shopping information, and the second transaction identifier is delivered by the mobile device 130 on the basis of the first transaction identifier, and is communicated from the mobile device 130 or one of the proximity device 120 and the cashier system 110. Upon confirmation of the payment, the server device 300 supplies a payment confirmation at least to the one of the proximity device 120 and the cashier system 110, and potentially also to the mobile device 130. Also, before a final confirmation of the payment, the shopping information can be transmitted to the mobile device 130 from the server device 300 directly or via the one of the proximity device 120 and the cashier system 110 for enabling the user/customer to verify and confirm the present purchase. For example, at least the total amount and a prompt for an explicit confirmation by the user via manual input can be displayed on the user's mobile device 130. Upon such explicit confirmation by the user, the mobile device 130 can inform the server device 130 about the final payment confirmation, and the server device can continue/complete the processing of the mobile payment process for the present purchase.

By way of a pairing/bonding operation between the proximity device and the mobile device of the user/customer, a bidirectional wireless communication between the proximity device and the mobile device is enabled, including the communication of transaction identifiers.

By way of matching operation between transaction identifiers, i.e. a locally generated transaction identifier and a transaction identifier delivered by the mobile device, the server device of the mobile payment service can allocate the user/customer to the shopping information of the present shopping transaction, i.e. associate the user/customer with the shopping basket content and/or the total amount of the recognized shopping items. Such allocation/association is based on the detected proximity of the user/customer to the proximity device, and identification information of the user/customer which are delivered together with the transaction identifier from the mobile device. For such allocation/association, the server device also takes into account a shop identifier and, optionally, a terminal identifier (of the cashier/POS system) and/or a proximity device identifier. Based on such allocation/association, the payment may be correctly processed.

In the following, example procedures according to exemplifying embodiments of the present invention are described for various exemplary use cases with reference to the self-checkout system of Figure 1.

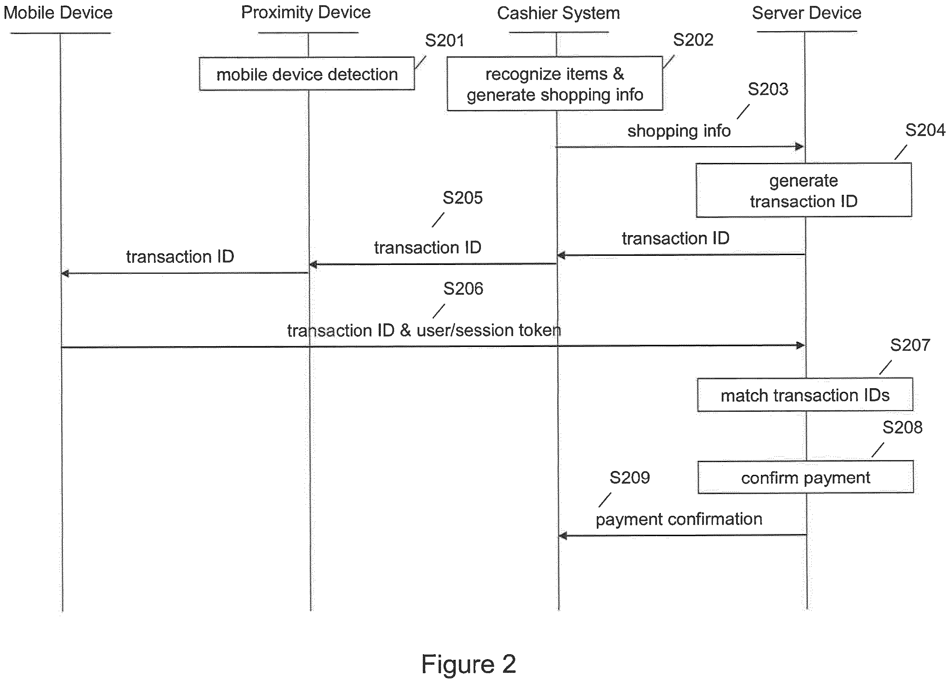

Figure 2 shows a diagram illustrating an example of a self-checkout procedure in a first exemplary use case according to exemplifying embodiments of the present invention. In the first exemplary use case underlying the procedure of Figure 2, it is assumed that the cashier system has a (direct) interface with the server device, but the proximity device does not have an interface with the server device, and the mobile device has wireless connectivity to the server device. Stated in other words, the first exemplary use case refers to an online mode of the mobile device in a system configuration with a (direct) cashier-server interface.

In step S201, the proximity device 120 detects or gets detected by the mobile device 130, i.e. the user/customer, in its proximity. In step S202, the cashier system 110 recognizes the customer's shopping items and generates the shopping information. In step S203, the cashier system 110 communicates the shopping information (e.g., at least the total amount) together with at least one shop-related identifier, e.g. its shop identifier and, optionally, a terminal identifier (namely, a device identifier of the cashier/POS system) to the server device 300. In step S204, the server device 300 established a transaction for the shopping information, and generates an associated (first) transaction identifier based on the shopping information using the at least one shop-related identifier. In step S205, the server device 300 communicates the generated (first) transaction identifier to the cashier system 110, the cashier system 110 (transparently) forwards the (first) transaction identifier to the proximity device 120, and the proximity device 120 communicates the (first) transaction identifier, which is received from the server device 300 via the cashier system 110, to the mobile device 130. In step S206, the mobile device 130 delivers the (first) transaction identifier, as previously received, as a (second) transaction identifier together with a user or session token, via its (online) wireless connection to the server device 300. Such user or session token indicates an allocation between the user of the mobile device 130 and the user's account in the mobile payment service, thereby proving/identifying that the user of the mobile device is a user of the mobile payment service. For example, such allocation may be established in that the mobile device is logically coupled to the user's account in the mobile payment service, which could be accomplished e.g. using an identifier of the payment application installed on that mobile device as well as a personal user identifier, such as a PIN, being input during a registration process. As the cashier system 110 has the (direct) communication interface with the server device, the mobile device 130 does not need to additionally communicate a shop identifier and, optionally, a terminal identifier of the proximity device 120 to the server device 300. Upon receipt of the (second) transaction identifier from the mobile device 130, in step S207, the server device 300 matches the previously generated (first) transaction identifier and the recently received (second) transaction identifier, and allocates the customer/user to the previously received shopping information (or, stated in other words, the present transaction) on the basis of the user token delivered together with the (second) transaction identifier. In step S208, the server device 300 confirms the payment (i.e. payment with respect to the shopping information or, stated in other words, the present transaction) the present transaction). In step S209, the server device 300 supplies a payment confirmation at least to the cashier system 110, and potentially also to the mobile device 130 (although not illustrated in Figure 2).

Although not illustrated and not forming a part of the invention as claimed, in the case of the proximity device 120 being a simple advertising tag (with unidirectional communication capability) without an interface to the cashier system 110 and sending a permanent/fixed universally unique identifier (UUID), the mobile device 130 acting as a scanner uses the signal strength of the received UUID signal for measuring the proximity, and uses the UUID together with its user token as an identifier to indicate/prove the user's presence in the shop and to allocate the user to the transaction requested by the cashier system 110. In such case, the (combination of) the UUID and the user token can be handled/taken as the mobile device-supplied (second) transaction identifier by the server device, or a corresponding (second) transaction identifier may be based thereon. Alternatively, the server device 300 can communicate the generated (first) transaction identifier directly to the mobile device 130 via the existing wireless connectivity there-between in step S205, and the mobile device 130 can deliver the (first) transaction identifier, as previously received, as a (second) transaction identifier to the server device 300 in step S206, as described above.

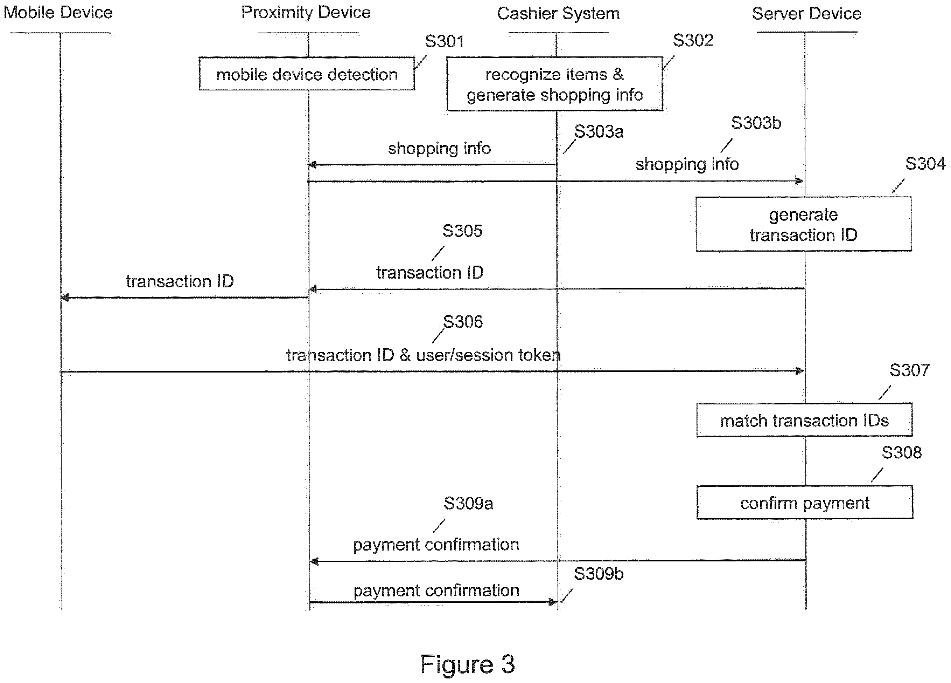

Figure 3 shows a diagram illustrating a first example of a self-checkout procedure in a second exemplary use case according to exemplifying embodiments of the present invention. In the second exemplary use case underlying the procedure of Figure 3, it is assumed that that the proximity device has a (direct) interface with the server device, but the cashier system does not have an interface with the server device, and the mobile device has wireless connectivity to the server device. Stated in other words, the second exemplary use case refers to an online mode of the mobile device in a system configuration with a (direct) proxy-server interface.

In the procedure of Figure 3, the operations/functions of steps S301 to S309 basically corresponds to that of steps S201 to S209 of Figure 2. For details thereof, reference is made to the above description of Figure 2, while only differences between the procedures of Figures 2 and 3 are described below.

Since the cashier system does not have a (direct) interface with the server device 300 here, the communication of the shopping information from the cashier system 110 to the server device 300 is effected by way of a (transparent) forwarding thereof via the proximity device 120. Namely, in steps S303a and S303b, the cashier system 110 communicates the shopping information to the proximity device 120, and the proximity device 120 communicates the shopping information together with at least one shop-related identifier, e.g. its shop identifier and, optionally, at least one terminal identifier (namely, a device identifier of the proximity device and/or the cashier/POS system), to the server device 300. Further, in step S309a, the server device 300 supplies a payment confirmation at least to the proximity device 120, and potentially also to the mobile device 130 (although not illustrated in Figure 3). Then, in step S309b, the proximity device 120 (transparently) forwards the payment confirmation to the cashier system 110.

Similar to the use case of Figure 2, the use case of Figure 3 is also applicable when the proximity device 120 is, according to an example not being part of the invention as claimed, a simple advertising tag (with unidirectional communication capability) without an interface to the cashier system 110 and sending a permanent/fixed universally unique identifier (UUID). For details in this regard, reference is made to the above description in connection with Figure 2.

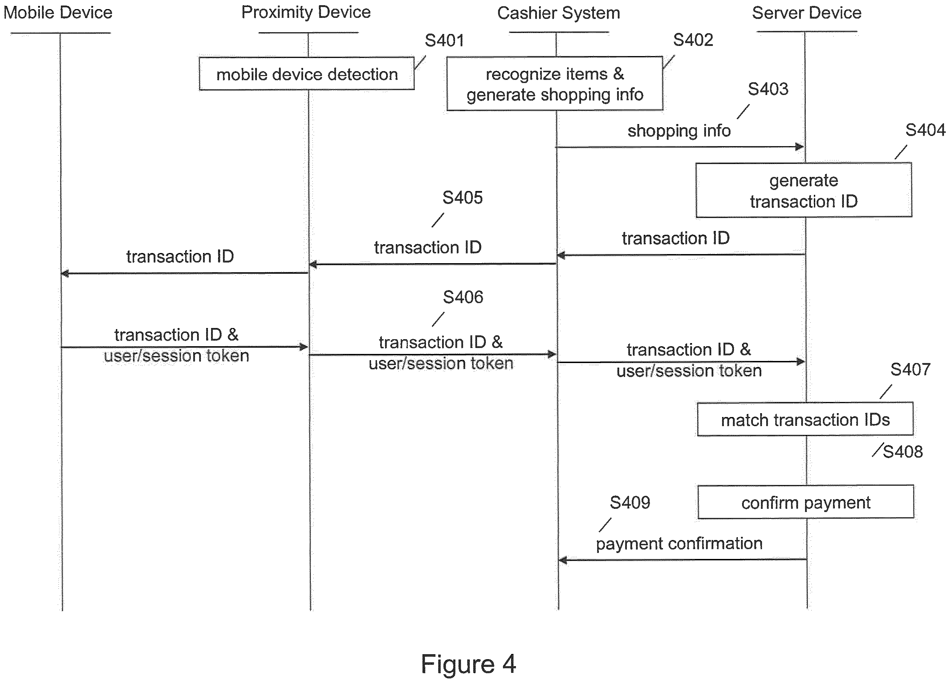

Figure 4 shows a diagram illustrating an example of a self-checkout procedure in a third exemplary use case according to exemplifying embodiments of the present invention. In the third exemplary use case underlying the procedure of Figure 4, it is assumed that the cashier system has a (direct) interface with the server device, but the proximity device does not have an interface with the server device, and the mobile device has no wireless connectivity to the server device. Stated in other words, the third exemplary use case refers to an offline mode of the mobile device in a system configuration with a (direct) cashier-server interface.

In the procedure of Figure 4, the operations/functions of steps S401 to S409 basically corresponds to that of steps S201 to S209 of Figure 2. For details thereof, reference is made to the above description of Figure 2, while only differences between the procedures of Figures 2 and 4 are described below.

Since the mobile device 130 has no wireless connectivity to the server device 300, but the cashier system has a (direct) interface with the server device 300, the communication of data from the mobile device 130 to the server device 300 is accomplished via the proximity device 120 and the cashier system 110. Namely, in step S406, the mobile device 130 delivers the (first) transaction identifier, as previously received, as a (second) transaction identifier together with a user or session token indicating an allocation between the user of the mobile device 130 and the user's account in the mobile payment service, to the proximity device 120, the proximity device 120 communicates the received data to the cashier device 110, and the cashier device (transparently) forwards the same to the server device 300.

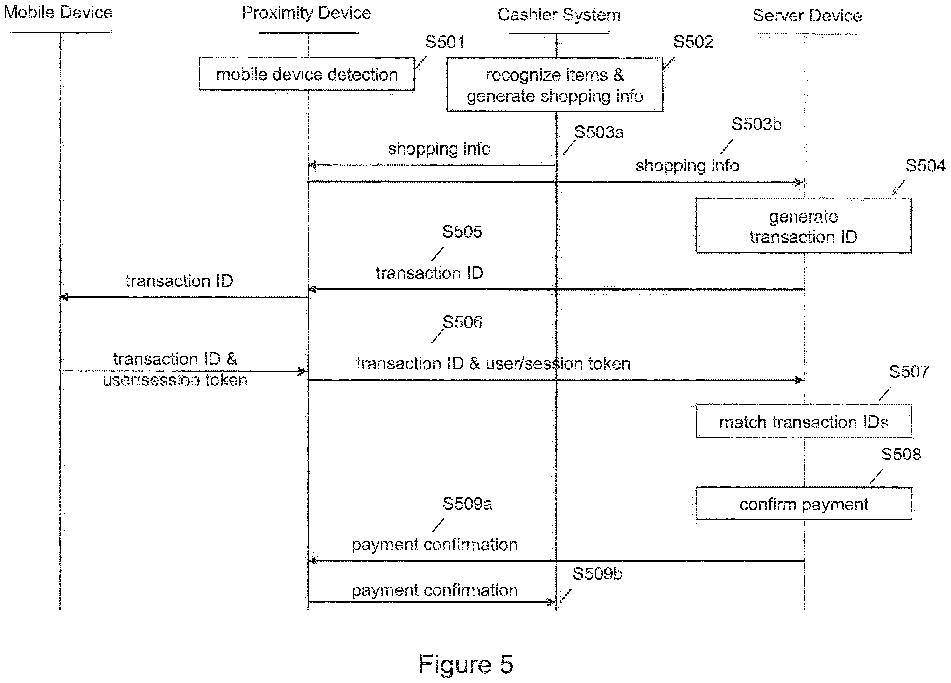

Figure 5 shows a diagram illustrating an example of a self-checkout procedure in a fourth exemplary use case according to exemplifying embodiments of the present invention. In the fourth exemplary use case underlying the procedure of Figure 5, it is assumed that that the proximity device has a (direct) interface with the server device, but the cashier system does not have an interface with the server device, and the mobile device has no wireless connectivity to the server device. Stated in other words, the fourth exemplary use case refers to an offline mode of the mobile device in a system configuration with a (direct) proxy-server interface.

In the procedure of Figure 5, the operations/functions of steps S501 to S509 basically corresponds to that of steps S301 to S309 of Figure 3. For details thereof, reference is made to the above description of Figure 3, while only differences between the procedures of Figures 3 and 5 are described below.

Since the cashier system does not have a (direct) interface with the server device 300 here, and the communication of the shopping information from the cashier system 110 to the server device 300 is effected by way of a (transparent) forwarding thereof via the proximity device 120, as illustrated in steps S503a and S503b. Further, since the mobile device 130 has no wireless connectivity to the server device 300, the communication of data from the mobile device 130 to the server device 300 is accomplished via the proximity device 120. Namely, in step S506, the mobile device 130 delivers the (first) transaction identifier, as previously received, as a (second) transaction identifier together with a user or session token indicating an allocation between the user of the mobile device 130 and the user's account in the mobile payment service, to the proximity device 120, and the proximity device 120 communicates the received data to the server device 300.

According to exemplifying embodiments of the present invention, any data transmission between any entities of the system described herein may or may not use encryption. Such encryption may be applied using common encryption standards, such as the Advanced Encryption Standard (AES), and Point to Point tunneling protocols, such as the Microsoft PPTP.

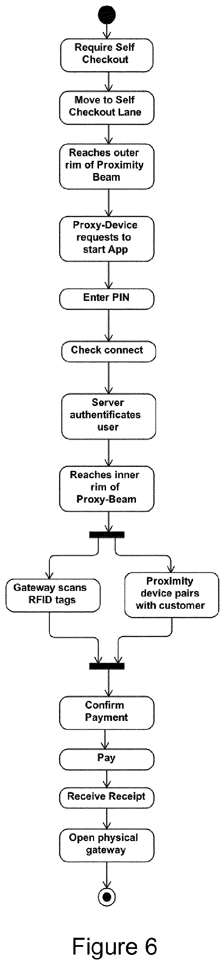

Figure 6 shows a flowchart illustrating an example of a self-checkout method according to exemplifying embodiments of the present invention. Specifically, Figure 6 illustrates a process flow from the perspective of a customer/user (and/or his/her mobile device) when applying a self-checkout fast lane with a mobile payment at a point of sale according to exemplifying embodiments of the present invention. The exemplary method of Figure 6 is based on the assumptions of any one of the first and second exemplary use cases, as described above in connection with Figures 2 and 3, i.e. wireless connectivity between the mobile device and the server device.

As shown in Figure 6, the user/customer may indicate to his/her mobile device that a self-checkout process is required/desired, and moves to the self-checkout lane. When the mobile device reaches a predefined proximity area of the proximity device, e.g. an outer rim of a proximity beam thereof, the proximity device may detect proximity of the mobile device, or the mobile device may detect its proximity to the proximity device. Upon detection of mutual proximity, the proximity device may e.g. cause/enable that the payment application in the mobile device is activated /started (e.g. by way of a corresponding push notification). By way of entering a personal identifier such as a PIN or a biometric feature, e.g. fingerprint, the customer may be identified. Then, the mobile device may check presence/availability of wireless connectivity to the server device, and the server device may authenticate the user/customer. When the mobile device detects presence/availability of wireless connectivity to the server device, it may activate an online modus. Otherwise, when the mobile device detects lack/unavailability of wireless connectivity to the server device, it may activate an offline modus.

When the mobile device reaches a predefined proximity area of the cashier system, e.g. an inner rim of a proximity beam thereof, the cashier system, i.e. the detector gate thereof, may scan product identifying tags, such as RFID tags, attached to the shopping items of the user/customer, and the proximity device may establish a paired relationship, i.e. a pairing/bonding, with the mobile device. Upon such pairing/bonding, the proximity device and the mobile device may communicate with each other in a bidirectional way, depending on the transmission capability of the proximity device, as exemplarily illustrated in Figures 2 to 5. Eventually, the server device may confirm the payment for the shopping transaction in progress, and thus the scanned shopping items may be paid for by way of the mobile payment service, i.e. the respective accounts of the user/customer and the shop in the mobile payment service. Optionally, the user/customer may receive a receipt for the shopping transaction, either directly after the payment process or, especially in case of a lack of wireless connectivity to the server, at a later time after resumption of the wireless connectivity to the server, e.g. after leaving the building of the shop. The cashier system may open a physical gateway/gate for unblocking the lane such that the user/custom may leave the shop after the payment process.

Generally, as proof of payment the user/customer can tear off a printed sales receipt at a respective printer, e.g. at the end of the checkout lane, or the user/customer can get a digital receipt on the mobile device, which is sent directly from the server device or via the proximity device, depending on where it has been created e.g. in the POS system or in the server device or in a self-computing proximity device, which in turn may depend on the way of transmission of the shopping basket information.

According to exemplifying embodiments of the present invention, a pairing/bonding between the mobile device and the proximity device, which enables a wireless (short-range) communication there-between) can be established by BLE and/or WLAN, for example. In the case of the BLE standard, establishing a connection does not take more than 3ms. The BLE standard provides different preset application profiles, as the proximity profile PXP for example. Although this profile does not have an absolute calibration of distances, the indoor positioning in the inner field around a respective device, such as the proximity device, is so precise that it ensures a very accurate proximity. For encryption, the BLE standard uses the advanced encryption standard with a key length of 128 bit (AES-18). The security setup may thus be administrated by the BLE scanning device, such as the proximity device or the mobile device. The pairing, which was established with short term keys, leads to a bonding with long term keys and a P2P-connection (P2P: Point-to-Point) between both devices for transmitting data there-between. In the case of the WLAN standard, for the connecting two devices without a central access point, it is advisable to use the ad-hoc modus. The recent security standard is the so-called WAP2 key. Under WLAN, it is possible to establish a secure, SSL-encrypted (SSL: Secure Sockets Layer) P2P-connection based on a respective certificate and open a VPN (Virtual Private Network) tunnel.

A pairing/bonding may generally be established in an in-band manner or an out-of-band manner with respect to a data communication standard for the wireless communication between the proximity device and the mobile device. In an in-band manner, the same channel/s and combination/s of data transmission standard/s are used for pairing/bonding and data transmission. In an out-of-band manner, different channels and combination/s of data transmission standard/s are used for pairing/bonding and data transmission, thus increasing security.

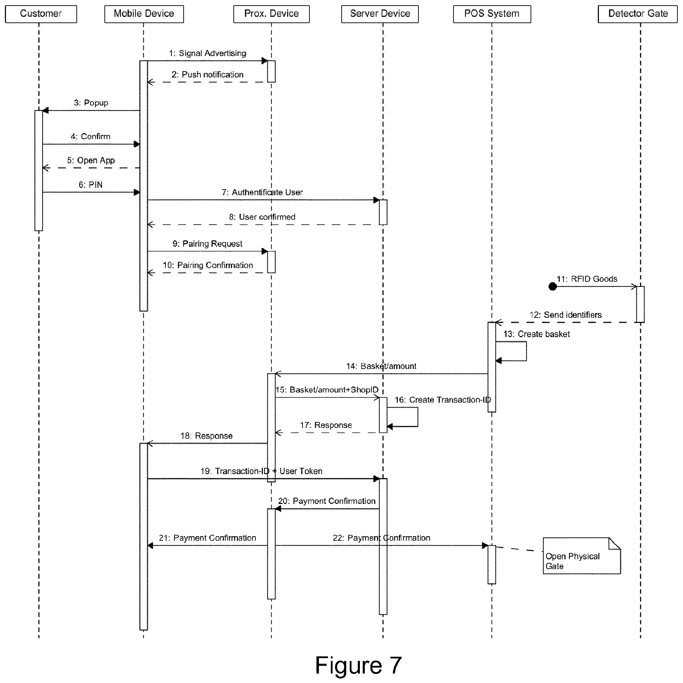

Figure 7 shows a diagram illustrating a second example of a self-checkout procedure in the second exemplary use case according to exemplifying embodiments of the present invention. Specifically, Figure 7 illustrates a process flow of messages, answers and requests between the process participating entities when applying a self-checkout fast lane with a mobile payment at a point of sale according to exemplifying embodiments of the present invention. The exemplary method of Figure 7 is based on the assumption of the second exemplary use case, as described above in connection with Figures 3, i.e. wireless connectivity between the mobile device and the serve device and a (direct) interface between the proximity device and the server device, but a lack of a (direct) interface between the cashier system, i.e. the POS system, and the server device. Also, it is assumed that the mobile device and the proximity device are paired/bonded and are communicable via the BLE communication standard.

With reference to Figure 7, only those operations/functions are described below, which are not already described in connection with Figure 3 above.

In the exemplary procedure of Figure 7, the mobile device takes the role as an advertiser and not as a BLE scanner. Namely, the mobile device actively signals an advertisement of its presence/proximity to the proximity device. Upon receipt of such advertisement, the proximity device detects the proximity of the mobile device, and may send a push notification via the BLE standard. Receipt of such BLE push notification, the mobile device may cause a popup at the mobile device, and the user/customer may enter a confirmation in response to such popup. Thereby, the payment application may be opened. Upon entry of a personal identifier such as a PIN or a biometric feature, e.g. fingerprint, into the mobile device, the user/customer may initiate his/her authentication at/by the server device, i.e. the server of the mobile payment service. When user authentication is confirmed by the server device, the mobile device may communicate a pairing/bonding request to the proximity device, and the proximity device may return a pairing/bonding confirmation when the pairing/bonding between the mobile device and the proximity device is established. After that, the process may continue, as previously described.

As described above, if the mobile device is able to establish an own connection to the server device, the user/customer can be invited by a push notification to open the payment application, e.g. in a certain, at least medium range before the checkout lane. After opening the payment application, the user/customer can authenticate himself/herself at the server device, for example by entering a PIN or a biometric feature, e.g. fingerprint, e.g. using authentication token.

According to exemplifying embodiments of the present invention, the mobile device may advertise its presence in the proximity thereof to at least one of a point-of-sale, a check-in point of the shop and an action point device of the shop, respectively. And, the mobile device may authenticate the user at the server device after activation of the payment application using an authentication token generated on the basis of an input personal identifier of the user.

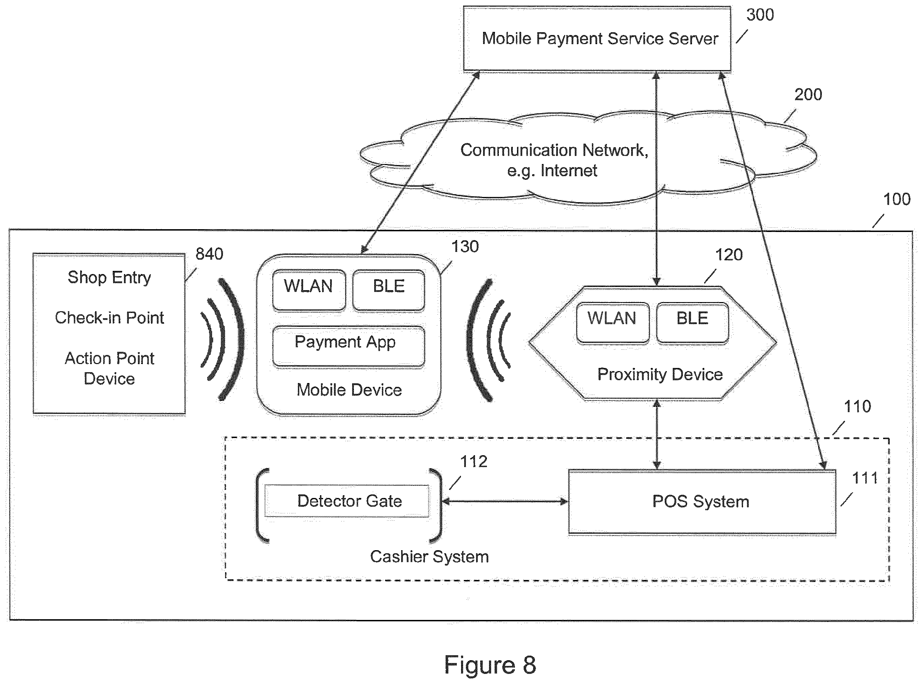

Figure 8 shows a schematic diagram illustrating a second example of a self-checkout system according to exemplifying embodiments of the present invention.

As shown in Figure 8, exemplifying embodiments of the present invention relate to a self-checkout system comprising at least one further communication-enabled device 840 in the shop environment 100 in addition to the entities described above in connection with Figure 1. Such communication-enabled device 840 may represent a shop entry/entrance, a check-in point of the shop, or an action point.

As detailed below, the payment application in the mobile device of a user/customer may be activated for operation in the self-checkout system upon a manual or automatic check-in of the user in the shop. The manual check-in may comprises at least one of selecting a check-in option for the shop in a shop finder, such as a corresponding application or application feature, on the mobile device, and invoking a check-in function for the shop in response to a notification of a check-in possibility for the shop. The automatic check-in may be triggered by at least one of entering the shop, approaching a specified check-in point of the shop, and approaching the proximity device.

More specifically, a manual or automated check-in of the user/customer into the chosen shop may happen directly before/at the shop door or while entering the shop (i.e. in the proximity of a shop entry) or within the proximity to a certain point of the shop, which may be located in the shop or near the shop (e.g. in the parking area of the shop). Also, the user/customer can manually preselect a check-in using a shop finder of a shop finder application or within the payment application, and the user/customer can set automatic future check-ins by clicking/switching a respective toggle in such a shop finder. The shop finder could be displayed in a list, a map or an augmented reality presentation, and it could be a possibility for the user/customer to select one of those presentations or a combination of them. Such a shop finder could also present general or special deals/offers applicable for a certain shop, which could be activated and redeemed for a later amount rebate, applicable order campaigns applicable for a certain shop, and/or loyalty programs applicable for a certain shop, wherein one of more of these may hereinafter be referred to as shopping-related information. The localization of the shops and the positioning of the customer can be ensured via different navigation standards, like e.g. real-time location via satellites or radio cells. In a short distance before the shop or while entering the shop or somewhere in the shop, the proximity of a user/customer can be detected by a shop device via different data transmission standards, such as e.g. BLE and/or WLAN.

For example, the user/customer can get a notification, if he/she is in a respective proximity to the shop or a respective shop device. Such a notification can be an invitation with an indication that the shop provides a self-checkout system, or that general or special deals/offers and/or order campaigns for a rebate or the like are applicable for users of the self-checkout system of the shop, and/or loyalty programs are accepted. Clicking such a notification, e.g. an associated popup on the display of the mobile device, can activate the payment application, redeem a coupon or/and select a loyalty program or activate a preselected loyalty program. Whether this happens already at the entrance of the shop or not until certain proximity in front of a respective shop device or the checkout lane may depend on possible time-out settings in the mobile device or the payment application thereof. It is also conceivable that several (push) notifications can open the payment application for several actions at different points, e.g. for special offers or order campaigns, at different shop devices, such as data advertising tags in the shop.

In an offline mode according to exemplifying embodiments of the present invention, it is still possible to open the payment application and use at least the unsecured parts thereof, like the shop finder for example. As described above, a check-in can be made manually with the shop finder. Selecting and clicking the respective shop toggle in an area of connectivity could submit a first personal user identifier (i.e. a user identifier UID), like an app ID for example, and a shop-related identifier, which are both, together with the shopping information, effective for allocating a transaction in the server device, to the server device. In the respective proximity to the checkout lane, the user/customer can be remembered by a push notification to open the payment application again. This may be specifically beneficial when it is not possible to run an application in the background and reactivate it automatically (such as e.g. in at least some iOS systems). A possible solution is to delay a time-out of the device or of the application, which is however quite power consuming and insecure and therefore not preferred. So, starting the payment application again can lead to an automated pairing and bonding, after the described check-in and in the right proximity relation. After establishing a secure P2P connection with the proximity device, an authenticating user token can be transferred from the mobile device over the proximity device to the server device and allow the user/customer after a successful authentication to process and confirm a payment without having an own (direct) Internet connectivity.

According to exemplifying embodiments of the present invention, shopping item or product identifying tags or labels can be deactivated completely or muted for a later reactivation. In the latter case, the tagged items can be controlled in a smart home inventory at the end of the supply chain. The deactivation can be ensured by an electromagnetic pulse, which can be sent directly after reading by the detector gate or after the confirmation of the payment at the physical gate.

As an action point device, the communication-enabled device 840 may emit shopping-related information including at least one of one or more applicable special offers, one or more applicable order campaigns, and one or more applicable loyalty programs, and the mobile device may initiate setting of the payment application in terms of the at least one of one or more applicable special offers, one or more applicable order campaigns, and one or more applicable loyalty programs upon reception of the shopping-related information.

According to exemplifying embodiments of the present invention, the mobile device may detect its proximity to at least one of a point-of-sale, a check-in point of the shop and an action point device of the shop on the basis of a received signal strength of a signal from the at least one of the point-of-sale, the check-in point of the shop and the action point device of the shop. That is, the mobile device and/or any application thereof can measure its distance/proximity to a certain point based on signal strength, which may be represented by a received signal strength indication (RSSI) value of the advertising device or tag, or vice versa. So, different spheres of action around the advertising device or tag can be preset in the respective application of the mobile device or a respective shop device.

According to exemplifying embodiments of the present invention, both the proximity device and the further communication-enabled device may represent a proximity-based data transmission or communication device.

By virtue of exemplifying embodiments of the present invention, as described above, there is enabled real self-checkout with mobile payment, such as in a self-checkout fastlane with cashless and cardless payment by a mobile payment service in a retail shop, in which the customer is not required to perform additional actions in the course of the purchasing and/or checkout processes. Accordingly, a user/customer is enabled to checkout automatically in passing a cashier lane without any further manual processes.

As evident from the above, various processes, functions and operations of shopping and checkout are based on the proximity of the user/customer, i.e. his/her mobile device, to certain radii of action or to certain points of action, e.g. the proximity to the proximity device, an action point, or the like.

According to exemplifying embodiments of the present invention, at least one or more of the following effects can be achieved:
- A shopping transaction and the associated checkout can be processed and completed without requiring any interaction, input or action by a user/customer. For example, a seam-/contactless physical checkout of purchased goods is enabled, i.e. omitting a requirement of individually scanning goods by shop assistants or the user himself/herself, and a fully automatic assignment of the customer and his/her shopping items/basket is enabled. Hence, a convenient and fast mobile payment technique can be provided.
- A shopping transaction and the associated checkout can be processed and completed on the basis of transaction identifiers and shopping information. On the one hand, the transaction identifiers to be matched originate from different sources or, stated in other words, are provided via different ways. On the other hand, no critical data are transmitted, which can be abused to corrupt a shopping transaction in bad faith. Hence, a mobile payment technique with increased security can be provided.
- A shopping transaction and the associated checkout can be processed and completed even when a mobile device of a user/customer is offline, i.e. has no connectivity to a server device of a mobile payment service realizing the payment. Hence, a mobile payment technique can be provided, which is implementable at any site and in any environment, even without communication network (e.g. Internet) accessibility.

The above-described methods, procedures and functions may be implemented by respective functional elements, entities, modules, units, processors, or the like, as described below.

While in the foregoing exemplifying embodiments of the present invention are described mainly with reference to methods, procedures and functions, corresponding exemplifying embodiments of the present invention also cover respective apparatuses, entities, modules, units, and nodes, including both software and/or hardware thereof.

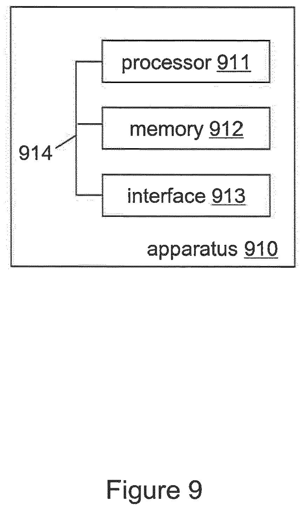

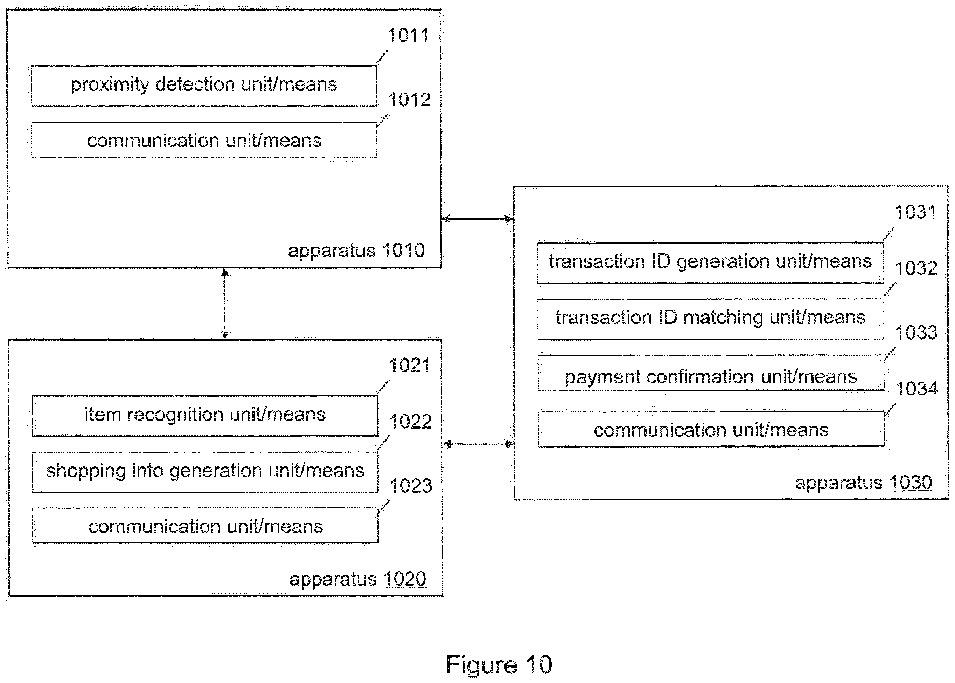

Respective exemplifying embodiments of the present invention are described below referring to Figures 9 and 10, while for the sake of brevity reference is made to the detailed description of respective corresponding configurations/setups, schemes, methods and functionality, principles and operations according to Figures 1 to 8.

In Figures 9 and 10, the solid line blocks are basically configured to perform respective methods, procedures and/or functions as described above. The entirety of solid line blocks are basically configured to perform the methods, procedures and/or functions as described above, respectively. With respect to Figures 9 and 10, it is to be noted that the individual blocks are meant to illustrate respective functional blocks implementing a respective function, process or procedure, respectively. Such functional blocks are implementation-independent, i.e. may be implemented by means of any kind of hardware or software or combination thereof, respectively.

Further, in Figures 9 and 10, only those functional blocks are illustrated, which relate to any one of the above-described methods, procedures and/or functions. A skilled person will acknowledge the presence of any other conventional functional blocks required for an operation of respective structural arrangements, such as e.g. a power supply, a central processing unit, respective memories, a display, or the like. Among others, one or more memories are provided for storing programs or program instructions for controlling or enabling the individual functional entities or any combination thereof to operate as described herein in relation to exemplifying embodiments.

In general terms, respective devices/apparatuses (and/or parts thereof) may represent means for performing respective operations and/or exhibiting respective functionalities, and/or the respective devices (and/or parts thereof) may have functions for performing respective operations and/or exhibiting respective functionalities.

In view of the above, the thus illustrated devices/apparatuses are suitable for use in practicing one or more of the exemplifying embodiments of the present invention, as described herein.

Figure 9 shows a schematic diagram illustrating an example of a structure of apparatuses according to exemplifying embodiments of the present invention.

As indicated in Figure 9, an apparatus 910 according to exemplifying embodiments of the present invention may comprise at least one processor 911 and at least one memory 912 (and possibly also at least one interface 913), which may be operationally connected or coupled, for example by a bus 914 or the like, respectively.

The processor 911 of the apparatus 810 is configured to read and execute computer program code stored in the memory 912. The processor may be represented by a CPU (Central Processing Unit), a MPU (Micro Processor Unit), etc, or a combination thereof. The memory 912 of the apparatus 910 is configured to store computer program code, such as respective programs, computer/processor-executable instructions, macros or applets, etc. or parts of them. Such computer program code, when executed by the processor 911, enables the apparatus 910 to operate in accordance with exemplifying embodiments of the present invention. The memory 912 may be represented by a RAM (Random Access Memory), a ROM (Read Only Memory), a hard disk, a secondary storage device, etc., or a combination of two or more of theses. The interface 913 of the apparatus 910 is configured to interface with another apparatus and/or the user of the apparatus 910. That is, the interface 913 may represent a communication interface (including e.g. a modem, an antenna, a transmitter, a receiver, a transceiver, or the like) and/or a user interface (such as a display, touch screen, keyboard, mouse, signal light, loudspeaker, or the like).

Accordingly, any one of the above-described schemes, methods, procedures, principles and operations may be realized in a computer-implemented manner.

The apparatus 910 may represent a (part of a) a cashier system, a proximity device, a server device, or a mobile device, as illustrated in Figures 1 and 8. The apparatus 910 may be configured to perform a procedure and/or exhibit a functionality, as described (for any one of these devices) in any one of Figures 2 to 7.

Any apparatus according to exemplifying embodiments of the present invention may be structured by comprising respective units or means for performing corresponding operations, procedures and/or functions. For example, such means may be implemented/realized on the basis of an apparatus structure, as exemplified in Figure 9 above, i.e. by one or more processors 911, one or more memories 912, one or more interfaces 913, or any combination thereof.

Figure 10 shows a schematic diagram illustrating another example of a structure of apparatuses according to exemplifying embodiments of the present invention.

As shown in Figure 10, an apparatus 1010 according to exemplifying embodiments of the present invention, which represents (part of) a proximity device, may comprise (at least) a unit or means for detecting proximity to a mobile device of a user of a mobile payment service in a shop supporting the mobile payment service (denoted as proximity detection unit/means 1011), and a unit or means for communicating respective data (denoted as communication unit/means 1012).

As shown in Figure 10, an apparatus 1020 according to exemplifying embodiments of the present invention, which represents (part of) a cashier system, may comprise (at least) a unit or means for automatically recognizing shopping items of the customer when approaching and/or passing the cashier system (denoted as item recognition unit/means 1012), a unit or means for generating shopping information, including at least one of a shopping basket content and a total amount of the recognized shopping items (denoted as shopping info generation unit/means 1022), and a unit or means for communicating respective data (denoted as communication unit/means 1023).

As shown in Figure 10, an apparatus 1030 according to exemplifying embodiments of the present invention, which represents (part of) a server, may comprise (at least) a unit or means for generating a transaction identifier on the basis of the shopping information (denoted as transaction ID generation unit/means 1031), a unit or means for matching transaction identifiers (denoted as transaction ID matching unit/means 1032), a unit or means for confirming payment of the recognized shopping items of the customer by the mobile payment service upon matching between the transaction identifiers (denoted as payment confirmation unit/means 1033), and a unit or means for communicating respective data (denoted as communication unit/means 1034).

For further details regarding the operability/functionality of the individual apparatuses according to exemplifying embodiments of the present invention, reference is made to the above description in connection with any one of Figures 1 to 8, respectively.

According to exemplifying embodiments of the present invention, any one of the processor, the memory and the interface may be implemented as individual modules, chips, chipsets, circuitries or the like, or one or more of them can be implemented as a common module, chip, chipset, circuitry or the like, respectively.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present invention. Such software may be software code independent and can be specified using any known or future developed programming language, such as e.g. Java, C++, C, and Assembler, as long as the functionality defined by the method steps is preserved. Such hardware may be hardware type independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components. A device/apparatus may be represented by a semiconductor chip, a chipset, or a (hardware) module comprising such chip or chipset; this, however, does not exclude the possibility that a functionality of a device/apparatus or module, instead of being hardware implemented, be implemented as software in a (software) module such as a computer program or a computer program product comprising executable software code portions for execution/being run on a processor. A device may be regarded as a device/apparatus or as an assembly of more than one device/apparatus, whether functionally in cooperation with each other or functionally independently of each other but in a same device housing, for example.

Apparatuses and/or units, means or parts thereof can be implemented as individual devices, but this does not exclude that they may be implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible or non-transitory medium such as a computer-readable (storage) medium having stored thereon a respective data structure or code means/portions or embodied in a signal or in a chip, potentially during processing thereof.

The present invention also covers any conceivable combination of method steps and operations described above, and any conceivable combination of nodes, apparatuses, modules or elements described above, as long as the above-described concepts of methodology and structural arrangement are applicable.

In view of the above, there are provided measures for enabling self-checkout with mobile payment, such as in a self-checkout fastlane with cashless and cardless payment by a mobile payment service in a retail shop. Such measures could exemplarily include a self-checkout system comprising: a proximity device configured to detect or get detected by a mobile device of a user of a mobile payment service in the proximity of a point-of-sale of a shop supporting the mobile payment service, and to identify the user of the mobile device as a customer, a cashier system configured to automatically recognize shopping items of the customer when approaching and/or passing the cashier system, and to generate shopping information, including at least one of a shopping basket content and a total amount of the recognized shopping items, and a server device configured to confirm payment of the recognized shopping items of the customer by the mobile payment service upon matching between a first transaction identifier, which is generated by the server device on the basis of the shopping information received from one of the proximity device and the cashier system, and a second transaction identifier, which is delivered by the mobile device and received from the mobile device or the one of the proximity device and the cashier system, and to supply a payment confirmation at least to the one of the proximity device and the cashier system.

Even though the invention is described above with reference to the examples and exemplifying embodiments with reference to the accompanying drawings, it is to be understood that the present invention is not restricted thereto. Rather, it is apparent to those skilled in the art that the above description of examples and exemplifying embodiments is for illustrative purposes and is to be considered to be exemplary and non-limiting in all respects, and the present invention can be modified in many ways without departing from the scope of the inventive idea as disclosed herein.

## Claims

1. A self-checkout system, comprising:
a proximity device (120) configured to detect or get detected by a mobile device (130) of a user of a mobile payment service in the proximity of a point-of-sale of a shop supporting the mobile payment service, wherein upon detection that a mobile device (130) reaches a predefined outer rim of the proximity beam of the proximity device (120), the proximity device (120) causes and/or enables that a payment application in the mobile device (130) is activated and/or started, wherein the user of the mobile device (130) is a customer,
a cashier system (110) configured to, when the mobile device (130) reaches a predefined proximity area of the cashier system (110), automatically recognize shopping items of the customer when approaching and/or passing the cashier system (110), and to generate shopping information, including at least one of a shopping basket content and a total amount of the recognized shopping items, and
a server device (300) configured to confirm payment by the mobile payment service upon matching between a first transaction identifier, which is generated by the server device (300) on the basis of the shopping information received from one of the proximity device (120) and the cashier system (110) and a second transaction identifier, which is delivered by the mobile device (130) and received from the mobile device (130) or the one of the proximity device (120) and the cashier system (110), and to supply a payment confirmation at least to the one of the proximity device (120) and the cashier system (110), the server device (300) further configured to communicate the first transaction identifier to the one of the proximity device (120) and the cashier system (110), the proximity device (120) further configured to receive the first transaction identifier from the server device (300) or the cashier system (110), wherein by way of the matching operation between the transaction identifiers, the server device (300) of the mobile payment service allocates the customer to the shopping information of the present shopping transaction, such allocation being based on the detected proximity of the customer to the proximity device (120), and identification information of the customer which are delivered together with the transaction identifier from the mobile device (130), and wherein for such allocation, the server device (300) also takes into account a shop identifier, wherein
at least one of the proximity device (120) and the mobile device (130) is configured to establish a paired relationship between the proximity device (120) and the mobile device (130) when the mobile device (130) reaches the predefined proximity area of the cashier system (110), said paired relationship enabling a bi-directional wireless communication between the proximity device (120) and the mobile device (130) in order to transmit the first transaction identifier from the proximity device (120) to the mobile device (130).

2. The self-checkout system according to claim 1, wherein
the at least one of the proximity device (120) and the mobile device (130) is configured to establish the paired relationship in an in-band manner or an out-of-band manner with respect to a data communication standard for the wireless communication between the proximity device (120) and the mobile device (130).

3. The self-checkout system according to claim 2, wherein
the data communication standard for the wireless communication between the proximity device (120) and the mobile device (130) comprises at least one of a Bluetooth Low Energy standard and a WLAN standard.

4. The self-checkout system according to any one of claims 1 to 3, wherein
the cashier system (110) is configured to sense product-identifying tags attached to the shopping items of the customer, said product-identifying tags indicating at least one of a product identification and a product prize of a respective item.

5. The self-checkout system according to any one of claims 1 to 4, wherein the cashier system (110) comprises
a detector gate (112) configured to automatically recognize the shopping items of the customer, and
a point-of-sale system (111) configured to generate the shopping information.

6. The self-checkout system according to any one of claims 1 to 5, wherein the mobile device (130) has wireless connectivity to the server device (300), wherein
the one of the proximity device (120) and the cashier system (110) is configured to communicate the shopping information together with at least one shop-related identifier to the server device (300),
the server device (300) is configured to generate the first transaction identifier based on the shopping information using the at least one shop-related identifier, and
the mobile device (130) is configured to deliver the second transaction identifier using the first transaction identifier together with a user or session token indicating an allocation between the user of the mobile device (130) and the user's account in the mobile payment service, and to communicate to the server device (300) the second transaction identifier.

7. The self-checkout system according to any one of claims 1 to 5, wherein the mobile device (130) has no wireless connectivity to the server device (300), wherein
the one of the proximity device (120) and the cashier system (110) is configured to communicate the shopping information together with at least one shop-related identifier to the server device (300),
the server device (300) is configured to generate the first transaction identifier based on the shopping information using the at least one shop-related identifier,
the mobile device (130) is configured to deliver the second transaction identifier using the first transaction identifier together with a user or session token indicating an allocation between the user of the mobile device (130) and the user's account in the mobile payment service, and to communicate the second transaction identifier to the proximity device (120), and
the proximity device (120) is configured to communicate the second transaction identifier to the server device (300), or the proximity device (120) is configured to communicate the second transaction identifier to the cashier system (110) and the cashier system (110) is configured to communicate the second transaction identifier to the server device (300), when the cashier system has a communication interface with the server device (300).

8. The self-checkout system according to claim 6 or 7, wherein
the at least one shop-related identifier comprises at least one of a shop identifier, a device identifier of the cashier system (110), and a device identifier of the proximity device (110).

9. The self-checkout system according to any one of claims 1 to 8 wherein
the mobile device (130) is configured to activate the payment application for operation in the self-checkout system upon a manual or automatic check-in of the user in the shop.

10. The self-checkout system according to any one of claims 1 to 9, wherein
the manual check-in comprises at least one of selecting a check-in option for the shop in a shop finder application on the mobile device (130), and invoking a check-in function for the shop in response to a notification of a check-in possibility for the shop, and/or
the automatic check-in is triggered by at least one of entering the shop, approaching a specified check-in point of the shop, and approaching the proximity device (120), and/or
the mobile device (130) is configured to authenticate the user at the server device (300) after activation of the payment application for operation in the self-checkout system using an authentication token generated on the basis of an input personal identifier of the user.

11. The self-checkout system according to claim 9 or 10, further comprising:
at least one action point device configured to emit shopping-related information including at least one of one or more applicable special offers, one or more applicable order campaigns, and one or more applicable loyalty programs,
wherein the mobile device (130) is configured to initiate setting of the payment application in terms of the at least one of one or more applicable special offers, one or more applicable order campaigns, and one or more applicable loyalty programs upon reception of the shopping-related information.

12. The self-checkout system according to any one of claims 1 to 11, wherein
the mobile device (130) is configured to detect its proximity to at least one of the point-of-sale, a check-in point of the shop and an action point device of the shop on the basis of a received signal strength of a signal from the at least one of the point-of-sale, the check-in point of the shop and the action point device of the shop, and to advertise its presence in the proximity thereof to the at least one of the point-of-sale, a check-in point of the shop and an action point device of the shop, respectively.

13. A self-checkout method in a self-checkout system comprising a proximity device (120), a cashier system (110) and a server device (300), comprising:
the proximity device (120) detects or gets detected by a mobile device (130) of a user of a mobile payment service in the proximity of a point-of-sale of a shop supporting the mobile payment service, wherein the user of the mobile device is a customer, wherein upon detection that a mobile device (130) reaches a predefined outer rim of the proximity beam of the proximity Z device (130), the proximity device (130) causes and/or enables that a payment application in the mobile device (130) is activated and/or started, and wherein the proximity device (120) and the mobile device (130) establish a paired relationship between the proximity device (120) and the mobile device (130) when the mobile device (130) approaches a predefined proximity area of the cashier system (110), said paired relationship enabling a bi-directional wireless communication between the proximity device (120) and the mobile device (130) in order to transmit a first transaction identifier from the proximity device (120) to the mobile device (130),
the cashier system (110), when the mobile device (130) reaches the predefined proximity area of the cashier system (110), automatically recognizes shopping items of the customer when approaching and/or passing the cashier system (110), and generates shopping information, including at least one of a shopping basket content and a total amount of the recognized shopping items, and
the server device (300) confirms payment by the mobile payment service upon matching between the first transaction identifier, which is generated by the server device (300) on the basis of the shopping information received from one of the proximity device (120) and the cashier system (110), and a second transaction identifier, which is delivered by the mobile device (130) on the basis of the first transaction identifier and received from the mobile device (130) or the one of the proximity device (120) and the cashier system (110), and supplies a payment confirmation at least to the one of the proximity device (120) and the cashier system (110), wherein the server device (300) communicates the first transaction identifier to the one of the proximity device (120) and the cashier system (110) wherein the proximity device (120) receives the first transaction identifier from the server device (300) or the cashier system (110), wherein by way of the matching operation between the transaction identifiers, the server device (300) of the mobile payment service allocates the customer to the shopping information of the present shopping transaction, such allocation being based on the detected proximity of the customer to the proximity device (120), and identification information of the customer which are delivered together with the transaction identifier from the mobile device (130), and wherein for such allocation, the server device (300) also takes into account a shop identifier.

14. A computer program product comprising computer-executable computer program code which, when the computer program code is executed in a self-checkout system, is configured to cause the self-checkout system to carry out the method according to claim 13.

## Patentansprüche

1. Selbstbedienungskassensystem, aufweisend:
eine Näherungsvorrichtung (120), die eingerichtet ist, eine Mobilvorrichtung (130) eines Nutzers eines Mobilbezahldienstes in der Nähe eines Point-of-Sale (POS) eines Geschäfts, das den Mobilbezahldienst unterstützt, zu detektieren oder von dieser detektiert zu werden, wobei beim Detektieren, dass eine Mobilvorrichtung (130) einen vorgegebenen Außenrand des Näherungsstrahls der Näherungsvorrichtung (120) erreicht, die Näherungsvorrichtung (120) veranlasst und/oder ermöglicht, dass eine Bezahlanwendung in der Mobilvorrichtung (130) aktiviert und/oder gestartet wird, wobei der Nutzer der Mobilvorrichtung (130) ein Kunde ist, ein Kassensystem (110), das eingerichtet ist, dann wenn die Mobilvorrichtung (130) einen vorgegebenen Näherungsbereich des Kassensystems (110) erreicht, Einkaufsartikel des Kunden automatisch zu erkennen, wenn dieser sich dem Kassensystem (110) nähert und/oder an diesem vorbeiläuft, und Einkaufsinformationen zu erzeugen, die einen Einkaufswagenkorbinhalt und/oder eine Gesamtmenge der erkannten Einkaufsartikel umfassen, und eine Servervorrichtung (300), die eingerichtet ist, die Zahlung durch den Mobilbezahldienst zu bestätigen, wenn eine erste Transaktionskennung, die von der Servervorrichtung (300) auf Grundlage der von der Näherungsvorrichtung (120) oder dem Kassensystem (110) empfangenen Einkaufsinformationen erzeugt wird, und eine zweite Transaktionskennung, die von der Mobilvorrichtung (130) geliefert und von der Mobilvorrichtung (130) oder der Näherungsvorrichtung (120) oder dem Kassensystem (110) empfangen wird, übereinstimmen, und eine Zahlungsbestätigung an die Näherungsvorrichtung (120) oder das Kassensystem (110) zu liefern, wobei die Servervorrichtung (300) ferner eingerichtet ist, der Näherungsvorrichtung (120) oder dem Kassensystem (110) die erste Transaktionskennung mitzuteilen, die Näherungsvorrichtung (120) ferner eingerichtet ist, die erste Transaktionskennung von der Servervorrichtung (300) oder dem Kassensystem (110) zu empfangen, wobei mittels des Abgleichvorgangs zwischen den Transaktionskennungen die Servervorrichtung (300) des Mobilbezahldienstes den Kunden der Einkaufsinformation der gegenwärtigen Einkaufstransaktion zuordnet, wobei eine solche Zuordnung auf der detektierten Näherung des Kunden an die Näherungsvorrichtung (120) sowie Identifikationsinformationen des Kunden, die zusammen mit der Transaktionskennung von der Mobilvorrichtung (130) geliefert werden, basiert, und wobei für eine solche Zuordnung die Servervorrichtung (300) ebenfalls eine Ladenkennung berücksichtigt, wobei die Näherungsvorrichtung (120) und/oder die Mobilvorrichtung (130) eingerichtet sind, eine Kopplungsbeziehung zwischen der Näherungsvorrichtung (120) und der Mobilvorrichtung (130) aufzubauen, wenn die Mobilvorrichtung (130) den vordefinierten Näherungsbereich des Kassensystems (110) erreicht, wobei die Kopplungsbeziehung eine bidirektionale Drahtloskommunikation zwischen der Näherungsvorrichtung (120) und der Mobilvorrichtung (130) ermöglicht, um die erste Transaktionskennung von der Näherungsvorrichtung (120) an die Mobilvorrichtung (130) zu übertragen.

2. Selbstbedienungskassensystem nach Anspruch 1, wobei die Näherungsvorrichtung (120) und/oder die Mobilvorrichtung (130) eingerichtet sind, die Kopplungsbeziehung in einer bandinternen Weise oder einer bandexternen Weise bezogen auf einen Datenkommunikationsstandard für die Drahtloskommunikation zwischen der Näherungsvorrichtung (120) und der Mobilvorrichtung (130) aufzubauen.

3. Selbstbedienungskassensystem nach Anspruch 2, wobei der Datenkommunikationsstandard für die Drahtloskommunikation zwischen der Näherungsvorrichtung (120) und der Mobilvorrichtung (130) einen Bluetooth-Low-Energy-Standard oder einen WLAN-Standard aufweist.

4. Selbstbedienungskassensystem nach einem der Ansprüche 1 bis 3, wobei das Kassensystem (110) eingerichtet ist, Produktkennungsetiketten zu sensieren, die an den Einkaufsartikeln des Kunden angebracht sind, wobei die Produktkennungsetiketten eine Produktkennung und/oder einen Produktpreis eines jeweiligen Artikels angeben.

5. Selbstbedienungskassensystem nach einem der Ansprüche 1 bis 4, wobei das Kassensystem (110) ein Detektorgatter (112), das eingerichtet ist, die Einkaufsartikel des Kunden automatisch zu erkennen, und ein Point-of-Sale-System (111) aufweist, das eigerichtet ist, die Einkaufsinformationen zu erzeugen.

6. Selbstbedienungskassensystem nach einem der Ansprüche 1 bis 5, wobei die Mobilvorrichtung (130) eine Drahtloskonnektivität zur Servervorrichtung (300) hat, wobei die Näherungsvorrichtung (120) oder das Kassensystem (110) eingerichtet ist, die Einkaufsinformationen zusammen mit zumindest einer Laden-bezogenen Kennung an die Servervorrichtung (300) zu übermitteln, die Servervorrichtung (300) eingerichtet ist, die erste Transaktionskennung auf Grundlage der Einkaufsinformationen mithilfe der zumindest einen Laden-bezogenen Kennung zu erzeugen, und die Mobilvorrichtung (130) eingerichtet ist, die zweite Transaktionskennung mithilfe der ersten Transaktionskennung zusammen mit einem Nutzer- oder Sitzungstoken, der eine Zuordnung zwischen dem Nutzer der Mobilvorrichtung (130) und dem Nutzerkonto in dem Mobilbezahldienst angibt, zuzuführen, und der Servervorrichtung (300) die zweite Transaktionskennung mitzuteilen.

7. Selbstbedienungskassensystem nach einem der Ansprüche 1 bis 5, wobei die Mobilvorrichtung (130) keine Drahtloskonnektivität zu der Servervorrichtung (300) hat, wobei die Näherungsvorrichtung (120) oder das Kassensystem (110) eingerichtet ist, die Einkaufsinformation zusammen mit zumindest einer Laden-bezogenen Kennung an die Servervorrichtung (300) zu übermitteln, die Servervorrichtung (300) eingerichtet ist, die erste Transaktionskennung auf Grundlage der Einkaufsinformationen mithilfe der zumindest einen Laden-bezogenen Kennung zu erzeugen, die Mobilvorrichtung (130) eingerichtet ist, die zweite Transaktionskennung mithilfe der ersten Transaktionskennung zusammen mit einem Nutzer- oder Sitzungstoken, der eine Zuordnung zwischen dem Nutzer der Mobilvorrichtung (130) und dem Nutzerkonto in dem Mobilbezahldienst angibt, zuzuführen, und die zweite Transaktionskennung an die Näherungsvorrichtung (120) zu übermitteln, und die Näherungsvorrichtung (120) eingerichtet ist, die zweite Transaktionskennung an die Servervorrichtung (300) zu übermitteln, oder die Näherungsvorrichtung (120) eingerichtet ist, die zweite Transaktionskennung an das Kassensystem (110) zu übermitteln, und das Kassensystem (110) eingerichtet ist, die zweite Transaktionskennung an die Servervorrichtung (300) zu übermitteln, wenn das Kassensystem eine Kommunikationsschnittstelle mit der Servervorrichtung (300) aufweist.

8. Selbstbedienungskassensystem nach Anspruch 6 oder 7, wobei die zumindest eine Laden-bezogene Kennung eine Ladenkennung und/oder eine Vorrichtungskennung des Kassensystems (110) und/oder eine Vorrichtungskennung der Näherungsvorrichtung (110) aufweist.

9. Selbstbedienungskassensystem nach einem der Ansprüche 1 bis 8, wobei die Mobilvorrichtung (130) eingerichtet ist, die Bezahlanwendung zum Betrieb in dem Selbstbedienungskassensystem bei einem manuellen oder automatischen Check-In des Nutzers in dem Laden zu aktivieren.

10. Selbstbedienungskassensystem nach einem der Ansprüche 1 bis 9, wobei der manuelle Check-In das Auswählen einer Check-In-Option für den Laden in einer Ladenfinderanwendung auf der Mobilvorrichtung (130) und/oder das Veranlassen einer Check-In-Option für den Laden als Reaktion auf eine Benachrichtigung einer Check-In-Möglichkeit für den Laden umfasst, und/oder der automatische Check-in durch das Betreten des Ladens und/oder das sich-Nähern eines konkreten Check-In-Points des Ladens und/oder das sich Nähern an die Näherungsvorrichtung (120) ausgelöst wird, und/oder die Mobilvorrichtung (130) eingerichtet ist, den Nutzer nach der Aktivierung der Bezahlanwendung für den Betrieb in dem Selbstbedienungskassensystem mithilfe eines Authentifizierungstokens, der auf Grundlage einer persönlichen Eingabekennung des Nutzers erzeugt wurde, an der Servervorrichtung (300) zu authentifizieren.

11. Selbstbedienungskassensystem nach Anspruch 9 oder 10, aufweisend:
zumindest eine Aktionspunktvorrichtung, die eingerichtet ist, einkaufsbezogene Informationen umfassend ein oder mehr anwendbare Sonderangeboten und/oder eine oder mehr anwendbare Befehlskampagnen und/oder ein oder mehr anwendbare Bonusprogramme zu emittieren, wobei die Mobilvorrichtung (130) eingerichtet ist, ein Einstellen der Zahlungsanwendung in Bezug auf das eine oder mehr anwendbare Sonderangebot und/oder die eine oder mehr anwendbare Bestellkampagne und/oder das eine oder mehr anwendbare Bonusprogrammen bei Empfang der einkaufsbezogenen Information zu initiieren.

12. Selbstbedienungskassensystem nach einem der Ansprüche 1 bis 11, wobei
die Mobilvorrichtung (130) eingerichtet ist, ihre Nähe zu dem Point-of-Sale und/oder einem Check-In-Punkt des Ladens und/oder einer Aktionspunktvorrichtung des Ladens auf Grundlage einer Empfangssignalstärke eines Signals von dem Point-of-Sale und/oder dem Check-In-Punkt des Ladens und/oder der Aktionspunktvorrichtung des Ladens zu detektieren, und ihre Gegenwart in der Nähe desselben an den Point-of-Sale und/oder einen Check-In-Punkt des Ladens und/oder eine Aktionspunktvorrichtung des Ladens zu bewerben.

13. Selbstbedienungsbezahlverfahren in einem Selbstbedienungskassensystem, aufweisend eine Näherungsvorrichtung (120), ein Kassensystem (110) und eine Servervorrichtung (300), umfassend:
die Näherungsvorrichtung (120) detektiert eine Mobilvorrichtung (130) eines Nutzers eines Mobilbezahldienstes in der Nähe eines Point-of-Sale eines Ladens, der den Mobilbezahldienst unterstützt, oder wird von dieser detektiert, wobei der Nutzer der Mobilvorrichtung ein Kunde ist, wobei beim Detektieren, dass eine Mobilvorrichtung (130) einen vorgegebenen Außenrand des Näherungsstrahls der Näherungsvorrichtung (130) erreicht, die Näherungsvorrichtung (120) veranlasst und/oder ermöglicht, dass eine Bezahlanwendung in der Mobilvorrichtung (130) aktiviert und/oder gestartet wird, und wobei die Näherungsvorrichtung (120) und die Mobilvorrichtung (130) eine Kopplungsbeziehung zwischen der Näherungsvorrichtung (120) und der Mobilvorrichtung (130) aufbauen, wenn die Mobilvorrichtung (130) einen vordefinierten Näherungsbereich des Kassensystems (110) erreicht,
wobei die Kopplungsbeziehung eine bidirektionale Drahtloskommunikation zwischen der Näherungsvorrichtung (120) und der Mobilvorrichtung (130) ermöglicht, um eine erste Transaktionskennung von der Näherungsvorrichtung (120) an die Mobilvorrichtung (130) zu übertragen, das Kassensystem (110), wenn die Mobilvorrichtung (130) den vorgegebenen Näherungsbereich des Kassensystems (110) erreicht, Einkaufsartikel des Kunden automatisch erkennt, wenn dieser sich dem Kassensystem (110) nähert und/oder an diesem vorbeiläuft, und Einkaufsinformationen erzeugt, die einen Einkaufswagenkorbinhalt und/oder eine Gesamtmenge der erkannten Einkaufsartikel umfassen, und die Servervorrichtung (300) die Zahlung durch den Mobilbezahldienst bestätigt, wenn eine erste Transaktionskennung, die von dem Serversystem (300) auf Grundlage der von der Näherungsvorrichtung (120) oder dem Kassensystem (110) empfangenen Einkaufsinformationen erzeugt wird, und eine zweite Transaktionskennung,
die von der Mobilvorrichtung (130) geliefert und von der Mobilvorrichtung (130) oder der Näherungsvorrichtung (120) oder dem Kassensystem (110) empfangen wird, übereinstimmen, und eine Zahlungsbestätigung an die Näherungsborrichtung (120) oder das Kassensystem (110) zuführt, wobei die Servervorrichtung (300) die erste Transaktionskennung an die Näherungsvorrichtung (120) oder das Kassensystem (110) übermittelt,
wobei die Näherungsvorrichtung (120) die erste Transaktionskennung von der Servervorrichtung (300) oder dem Kassensystem (110) empfängt, wobei mittels des Abgleichvorgangs zwischen den Transaktionskennungen, die Servervorrichtung (300) der Mobilbezahlvorrichtung den Kunden den Einkaufsinformationen der aktuellen Einkaufstransaktion zuordnet, wobei eine solche Zuordnung auf der detektierten Nähe des Kunden zu der Näherungsvorrichtung (120), und Identifizierungsinformationen des Kunden basiert, die zusammen mit der Transaktionskennung von der Mobilvorrichtung (130) zugeführt werden, und wobei für eine solche Zuordnung die Servervorrichtung (300) auch eine Ladenkennung berücksichtigt.

14. Computerprogrammprodukt, aufweisend computerausführbaren Programmcode, der, wenn der Computerprogrammcode in einem Selbstbedienungskassensystem ausgeführt wird, eingerichtet ist, das Selbstbedienungskassensystem zu veranlassen, das Verfahren nach Anspruch 13 durchzuführen.

## Revendications

1. Système d'auto-vérification, comprenant :
un dispositif de proximité (120) conçu pour détecter ou pour être détecté par un appareil mobile (130) d'un utilisateur d'un service de paiement mobile à proximité d'un point de vente d'un magasin soutenant le service de paiement mobile, où, lors de la détection de l'arrivée d'un appareil mobile (130) au niveau d'un bord externe prédéfini du faisceau de proximité du dispositif de proximité (120), le dispositif de proximité (120) provoque et/ou permet l'activation et/ou le démarrage d'une application de paiement dans l'appareil mobile (130), l'utilisateur de l'appareil mobile (130) étant un client, un système de caisse (110) conçu, lorsque l'appareil mobile (130) atteint une zone de proximité prédéfinie du système de caisse (110), pour reconnaître automatiquement des articles d'achat du client lorsqu'il se approche de, et/ou passe par, le système de caisse (110), et pour produire des informations d'achat, comprenant un contenu d'un panier et/ou une quantité totale des articles d'achat reconnus, et un dispositif serveur (300) conçu pour confirmer le paiement au moyen du service de paiement mobile lors d'une mise en correspondance entre un premier identifiant de transaction, produit par le dispositif serveur (300) en fonction des informations d'achat reçues à partir du dispositif de proximité (120) ou du système de caisse (110), et un second identifiant de transaction, émis par l'appareil mobile (130) et reçu à partir de l'appareil mobile (130) ou à partir du dispositif de proximité (120) ou du système de caisse (110), et pour fournir une confirmation de paiement au moins au dispositif de proximité (120) ou au système de caisse (110), le dispositif serveur (300) étant conçu en outre pour communiquer le premier identifiant de transaction au dispositif de proximité (120) ou au système de caisse (110), le dispositif de proximité (120) étant conçu en outre pour recevoir le premier identifiant de transaction à partir du dispositif serveur (300) ou du système de caisse (110), où, au moyen de l'opération de mise en correspondance entre les identifiants de transaction, le dispositif serveur (300) du service de paiement mobile affecte le client aux informations d'achat de la transaction d'achat en cours, ladite affectation étant fondée sur la proximité détectée du client au dispositif de proximité (120), et sur les informations d'identification du client fournies conjointement avec l'identifiant de transaction à partir de l'appareil mobile (130), et où, pour ladite affectation, le dispositif serveur (300) prend aussi en considération un identifiant de magasin, où le dispositif de proximité (120) et/ou l'appareil mobile (130) sont conçus pour établir une relation appariée entre le dispositif de proximité (120) et l'appareil mobile (130) lorsque l'appareil mobile (130) atteint la zone de proximité prédéfinie du système de caisse (110), la dite relation appariée permettant une communication sans fil bidirectionnelle entre le dispositif de proximité (120) et l'appareil mobile (130) afin de transmettre le premier identifiant de transaction du dispositif de proximité (120) à l'appareil mobile (130).

2. Système d'auto-vérification selon la revendication 1, dans lequel le dispositif de proximité (120) et/ou l'appareil mobile (130) sont conçus pour établir la relation apparié de manière en bande ou hors bande par rapport à une norme de communication de données pour la communication sans fil entre le dispositif de proximité (120) et l'appareil mobile (130).

3. Système d'auto-vérification selon la revendication 2, dans lequel la norme de communication de données pour la communication sans fil entre le dispositif de proximité (120) et l'appareil mobile (130) comprend une norme de Basse Énergie Bluetooth et/ou une norme WLAN.

4. Système d'auto-vérification selon l'une quelconque des revendications 1 à 3, dans lequel le système de caisse (110) est conçu pour détecter des étiquettes d'identification de produit fixées aux articles d'achat du client, lesdites étiquettes d'identification de produit indiquant une identification de produit et/ou un prix de produit d'un article respectif.

5. Système d'auto-vérification selon l'une quelconque des revendications 1 à 4, dans lequel le système de caisse (110) comprend une porte de détection (112) conçue pour reconnaître automatiquement les articles d'achat du client, et un système de point de vente (111) conçu pour produire les informations d'achat.

6. Système d'auto-vérification selon l'une quelconque des revendications 1 à 5, dans lequel l'appareil mobile (130) présente une connectivité sans fil au dispositif serveur (300), où le dispositif de proximité (120) ou le système de caisse (110) est conçu pour communiquer les informations d'achat, conjointement avec au moins un identifiant lié au magasin, au dispositif serveur (300), le dispositif serveur (300) est conçu pour produire le premier identifiant de transaction en fonction des informations d'achat à l'aide du ou des identifiants liés au magasin, et l'appareil mobile (130) est conçu pour fournir le second identifiant de transaction à l'aide du premier identifiant de transaction conjointement avec un jeton d'utilisateur ou de session indiquant une affectation entre l'utilisateur de l'appareil mobile (130) et le compte de l'utilisateur dans le service de paiement mobile, et pour communiquer, au dispositif serveur (300), le second identifiant de transaction.

7. Système d'auto-vérification selon l'une quelconque des revendications 1 à 5, dans lequel l'appareil mobile (130) ne présente pas de connectivité sans fil avec le dispositif serveur (300), et où le dispositif de proximité (120) ou le système de caisse (110) est conçu pour communiquer les informations d'achat, conjointement avec au moins un identifiant lié au magasin, au dispositif serveur (300), le dispositif serveur (300) est conçu pour produire le premier identifiant de transaction en fonction des informations d'achat à l'aide du ou des identifiants liés au magasin, l'appareil mobile (130) est conçu pour fournir le second identifiant de transaction à l'aide du premier identifiant de transaction conjointement avec un jeton d'utilisateur ou de session indiquant une affectation entre l'utilisateur de l'appareil mobile (130) et le compte de l'utilisateur dans le service de paiement mobile, et pour communiquer le second identifiant de transaction au dispositif de proximité (120), et le dispositif de proximité (120) est conçu pour communiquer le second identifiant de transaction au dispositif serveur (300), ou bien le dispositif de proximité (120) est conçu pour communiquer le second identifiant de transaction au système de caisse (110), et le système de caisse (110) est conçu pour communiquer le second identifiant de transaction au dispositif serveur (300), lorsque le système de caisse comporte une interface de communication avec le dispositif serveur (300).

8. Système d'auto-vérification selon les revendications 6 ou 7, dans lequel le ou les identifiants liés au magasin comprennent un identifiant de magasin, et/ou un identifiant d'appareil du système de caisse (110), et/ou un identifiant d'appareil du dispositif de proximité (110).

9. Système d'auto-vérification selon l'une quelconque des revendications 1 à 8, dans lequel l'appareil mobile (130) est conçu pour activer l'application de paiement afin d'effectuer une opération dans le système d'auto-vérification lors d'un enregistrement manuel ou automatique de l'utilisateur dans le magasin.

10. Système d'auto-vérification selon l'une quelconque des revendications 1 à 9, dans lequel l'enregistrement manuel comprend la sélection d'une option d'enregistrement pour le magasin dans une application de localisation de magasins sur l'appareil mobile (130), et/ou l'appel à une fonction d'enregistrement pour le magasin en réponse à une notification d'une possibilité d'enregistrement pour le magasin, et/ou l'enregistrement automatique est déclenché par l'entrée dans le magasin, et/ou par l'approche d'un point d'enregistrement spécifié du magasin, et/ou par l'approche du dispositif de proximité (120), et/ou l'appareil mobile (130) est conçu pour authentifier l'utilisateur au niveau du dispositif serveur (300) après activation de l'application de paiement pour effectuer l'opération dans le système d'auto-vérification à l'aide d'un jeton d'authentification produit en fonction d'un identifiant personnel d'entrée de l'utilisateur.

11. Système d'auto-vérification selon les revendications 9 ou 10, comprenant en outre : au moins un dispositif de point d'intervention conçu pour émettre des informations liées aux courses comprenant une ou plusieurs offres spéciales applicables, et/ou une ou plusieurs campagnes de commande applicables, et/ou un ou plusieurs programmes de fidélité applicables, l'appareil mobile (130) étant conçu pour initier le paramétrage de l'application de paiement dans le contexte d'une ou plusieurs offres spéciales applicables, et/ou d'une ou plusieurs campagnes de commande applicables, et/ou d'un ou plusieurs programmes de fidélité applicables, lors de la réception des informations liées au magasin.

12. Système d'auto-vérification selon l'une quelconque des revendications 1 à 11, dans lequel l'appareil mobile (130) est conçu pour détecter sa proximité au point de vente, et/ou à un point d'enregistrement du magasin, et/ou à un dispositif de point d'intervention du magasin, en fonction d'une force de signal reçue d'un signal en provenance du point de vente, et/ou du point d'enregistrement du magasin, et/ou du dispositif de point d'intervention du magasin, et pour alerter sa présence lors de sa proximité au point de vente, et/ou à un point d'enregistrement du magasin, et/ou à un dispositif de point d'intervention du magasin, respectivement.

13. Procédé d'auto-vérification dans un système d'auto-vérification comprenant un dispositif de proximité (120), un système de caisse (110) et un dispositif serveur (300), le procédé comprenant les étapes suivantes :
le dispositif de proximité (120) détecte ou est détecté par un appareil mobile (130) d'un utilisateur d'un service de paiement mobile à proximité d'un point de vente d'un magasin soutenant le service de paiement mobile, l'utilisateur de l'appareil mobile étant un client, où, lors de la détection de l'arrivée d'un appareil mobile (130) au niveau d'un bord externe prédéfini du faisceau de proximité du dispositif de proximité (130), le dispositif de proximité (130) provoque et/ou permet l'activation et/ou le démarrage d'une application de paiement sur l'appareil mobile (130), et où le dispositif de proximité (120) et l'appareil mobile (130) établissent une relation apparié entre le dispositif de proximité (120) et l'appareil mobile (130) lorsque l'appareil mobile (130) s'approche d'une zone de proximité prédéfinie du système de caisse (110), ladite relation appariée permettant une communication sans fil bidirectionnelle entre le dispositif de proximité (120) et l'appareil mobile (130) afin de transmettre un premier identifiant de transaction du dispositif de proximité (120) à l'appareil mobile (130),
le système de caisse (110), lorsque l'appareil mobile (130) atteint la zone de proximité prédéfinie du système de caisse (110), reconnaît automatiquement des articles d'achat du client lorsqu'il se approche de, et/ou passe par, le système de caisse (110), et produit des informations d'achat, comprenant un contenu du panier et/ou une quantité totale des articles d'achat reconnus, et le dispositif serveur (300) confirme le paiement au moyen du service de paiement mobile lors d'une mise en correspondance entre le premier identifiant de transaction, produit par le dispositif serveur (300) en fonction des informations d'achat reçues à partir du dispositif de proximité (120) ou du système de caisse (110), et un second identifiant de transaction émis par l'appareil mobile (130) en fonction du premier identifiant de transaction et reçu à partir de l'appareil mobile (130) ou à partir du dispositif de proximité (120) ou du système de caisse (110), et fournit une confirmation de paiement au moins au dispositif de proximité (120) ou au système de caisse (110), le dispositif serveur (300) communiquant le premier identifiant de transaction au dispositif de proximité (120) ou au système de caisse (110),
où le dispositif de proximité (120) reçoit le premier identifiant de transaction à partir du dispositif serveur (300) ou du système de caisse (110), où, au moyen de l'opération de mise en correspondance entre les identifiants de transaction, le dispositif serveur (300) du service de paiement mobile affecte le client aux informations d'achat de la transaction d'achat en cours, ladite affectation étant fondée sur la proximité détectée du client au dispositif de proximité (120), et sur les informations d'identification du client fournies conjointement avec l'identifiant de transaction à partir de l'appareil mobile (130),
et où, pour ladite affectation, le dispositif serveur (300) prend aussi en considération un identifiant de magasin.

14. Produit programme informatique comprenant un code de programme informatique pouvant être exécuté par un ordinateur, lequel, lorsque le code de programme informatique est exécuté dans un système d'auto-vérification, est conçu pour amener le système d'auto-vérification à effectuer le procédé selon la revendication 13.
